# EUROPÄISCHE PATENTSCHRIFT

(11) **EP 1 175 561 B1**
(45) Veröffentlichungstag und Bekanntmachung des Hinweises auf die Patenterteilung: **06.07.2005**
(21) Anmeldenummer: 00988605.2
(22) Anmeldetag: 10.11.2000
(51) Int. Cl.: F02N 11/04

(54) **ROTORKÖRPER**
ROTOR BODY
CORPS DE ROTOR

(30) Priorität: 15.11.1999 DE 19955050
(43) Veröffentlichungstag der Anmeldung: 30.01.2002
(73) Patentinhaber: ROBERT BOSCH GMBH, 70442 Stuttgart (DE)
(72) Erfinder: WESSELS, Siegbert, 31141 Hildesheim (DE)
(86) Internationale Anmeldenummer: PCT/DE2000/004010
(87) Internationale Veröffentlichungsnummer: WO 2001/036814

(56) Entgegenhaltungen:
- EP-A- 0 952 335
- DE-A- 3 301 245
- DE-A- 10 006 002
- DE-A- 19 905 538
- WIEDEMANN E ET AL: "DIE BAUELEMENTE ELEKTRISCHER MASCHINEN I DAS BLECHPAKET" , KONSTRUKTION ELEKTRISCHER MASCHINEN,DE,SPRINGER VERLAG, BERLIN, PAGE(S) 267-273 XP002003291 Seite 269, Zeile 13 - Zeile 28; Abbildungen 184,185

## Beschreibung

Die Erfindung betrifft einen Rotorkörper, insbesondere für den Rotor des Starters oder des Starter-Generators einer Brennkraftmaschine, mit den im Oberbegriff des Anspruchs 1 genannten Merkmalen.

### Stand der Technik

Rotorkörper der gattungsgemäßen Art sind bekannt. Derartige Rotorkörper können Bestandteil eines Elektromotors sein, der wiederum Bestandteil eines Starters bzw. eines Anlassers für den Motor einer Brennkraftmaschine sein kann.

Die zum Starten von Verbrennungsmotoren eingesetzten Elektromotoren sind Gleich-, Wechsel- und Drehstrommotoren. Besonders als Startermotor geeignet ist der elektrische Gleichstrom-Reihenschlußmotor, da er das erforderliche hohe Anfangsdrehmoment zur Überwindung der Andrehwiderstände und zur Beschleunigung der Triebwerksmassen entwickelt.

Überwiegend wird das Drehmoment des Starters über ein Ritzel und einen Zahnkranz auf das Schwungrad an der Kurbelwelle des Verbrennungsmotors übertragen. In vereinzelten Fällen werden aber auch Keilriemen, Zahnriemen, Ketten oder die Direktübertragung auf die Kurbelwelle gewählt. Der Ritzelstarter ist jedoch wegen der großen Übersetzung zwischen Starterritzel und Zahnkranz der Motorschwungscheibe am besten für einen Startvorgang geeignet, da er auf ein niedriges Drehmoment bei hohen Drehzahlen ausgelegt werden kann. Diese Auslegung ermöglicht es, die Abmessungen und das Gewicht des Starters klein zu halten.

Neben derartigen Startern sind auch sogenannte Starter-Generatoren bekannt, die als Starter für die Brennkraftmaschine, als Antriebsmotor des Fahrzeugs und als Lichtmaschine einsetzbar sind.

Die Kopplung mit der Brennkraftmaschine und/oder einem Getriebe sowie die Anordnung solcher Starter-Generatoren kann sich aufgrund des erweiterten Verwendungszwecks von der einfacher Starter unterscheiden.

Allerdings weisen auch derartige Starter-Generatoren häufig einen gattungsgemäßen Rotorkörper auf.

Die Form der gattungsgemäßen Rotorkörper ist häufig kompliziert. Dies kann beispielsweise durch vorzusehende Anschraubstege bedingt sein, an denen ein Kupplungszwischenflansch befestigt werden kann. Diese komplizierte Form des Rotorkörpers hat den Nachteil, daß die Rotorkörperherstellung sehr aufwendig ist, weil sie nur durch eine Kombination von an ein und demselben Werkstück durchgeführten Dreh- und Fräs- bzw. Stanzverfahren möglich ist. Die Herstellung des Rotorkörpers ist daher zeit- und somit kostenintensiv, wobei die bei der Herstellung anfallende Abfallmenge darüber hinaus groß ist.

Aus der gattungsbildenden Veröffentlichung von Wiedemann et al., "Die Bauelemente elektrischer Maschinen, I Das Blechpaket" in Konstruktion elektrischer Maschinen, Springer Verlag, Berlin, Seiten 267-273 (XP002003291), aber auch aus den Offenlegungsschriften DE 199 05 538 sowie DE 33 01 245 sind Rotorkörper bekannt mit einer koaxial zur Rotordrehachse verlaufenden Nabe, wobei der Rotorkörper aus einem rotationssymmetrischen, die Nabe bildenden Grundkörper und einer oder mehreren Lamellen gebildet ist, die in Richtung der Rotordrehachse jeweils eine durchgehend gleiche Stärke aufweisen.

### Vorteile der Erfindung

Der erfindungsgemäße Rotorkörper kann vergleichsweise einfach und damit kostengünstig hergestellt werden. Dadurch, daß der Rotorkörper aus einem rotationssymmetrischen, die Nabe bildenden, Grundkörper und einer oder mehreren Lamellen gebildet ist, die in Richtung der Rotordrehachse jeweils eine durchgehend gleiche Stärke aufweisen, können die einzelnen Bestandteile des Rotors zumindest überwiegend durch ein einziges Bearbeitungsverfahren hergestellt werden, das sich für die jeweilige Form besonders eignet.

Der erfindungsgemäße Rotorkörperaufbau ist besonders vorteilhaft, wenn es sich um einen nicht-rotationssymmetrischen Rotorkörper handelt, dessen Herstellung durch bekannte Bearbeitungsverfahren besonders aufwendig wäre.

Die Herstellung des die Nabe bildenden rotationssymmetrischen Grundkörpers kann beispielsweise durch Drehen erfolgen.

Ebenso ist es jedoch denkbar, die Nabe als Stanz-Zieh-Biegeteil herzustellen, welches beispielsweise mit den Lamellen vernietet werden kann.

Der Begriff "rotationssymmetrisch" soll hier nicht streng mathematisch, sondern vielmehr im Hinblick auf das angewendete Bearbeitungsverfahren derart aufgefaßt werden, daß beispielsweise Bohrungen, die an einzelnen Stellen eines durch Drehen hergestellten Grundkörpers vorgesehen sind, nicht zwingend symmetrisch sein müssen.

Die Lamellen können stanzpaketierte oder einstückig hergestellte Lamellen sein. Der Einsatz von stanzpaketierten Lamellen, die aus mehreren deckungsgleichen durch Stanzen hergestellten Blechen gebildet sein können, ermöglicht eine besonders kostengünstige Herstellung.

Auch der Grundkörper kann ggf. als stanzpaketiertes Teil vorliegen, so daß sich nach der Montage des Rotors insgesamt eine paketierte Baugruppe ergibt.

Zum Zusammensetzen des Rotorkörpers ist es erforderlich, daß die einzelnen Lamellen mit dem Grundkörper verbunden werden. Sofern eine oder mehrere der einzelnen Lamellen in. Form von stanzpaketierten Lamellen vorliegen, können zunächst die einzelnen Lamellen durch geeignete Verbindungsmittel zusammengesetzt und anschließend mit dem Grundkörper verbunden werden. Ebenso ist es denkbar, daß sowohl die einzelnen Lamellenbestandteile als auch der Grundkörper durch gemeinsame Verbindungsmittel verbunden werden.

Diese Verbindungsmittel können beispielsweise durch Schrauben und/oder Stifte und/oder Bolzen und/oder Nieten gebildet sein.

Vorzugsweise ist der Außenumfangsbereich des Rotorkörpers durch eine oder mehrere Lamellen gebildet. Die in der Regel am Außenumfangsbereich vorgesehene Rotorwicklung kann dann direkt auf der oder den Lamellen angeordnet sein.

Die Kraftübertragung vom Rotorkörper in die Kupplung erfolgt dann vorzugsweise direkt über eine oder mehrere Lamellen, so daß die Verbindung zwischen dem Grundkörper und den Lamellen nur einer geringeren Belastung ausgesetzt wird, als dies der Fall wäre, wenn die Kraftübertragung von den Lamellen in den Grundkörper und von dort in die Kupplung erfolgen würde.

Eine oder mehrere Lamellen bilden vorzugsweise zu Zwecken der genannten Kraftübertragung einen Verbindungsbereich, der zur Verbindung des Rotorkörpers mit zumindest einem Kupplungselement vorgesehen ist.

Ein Kupplungselement kann beispielsweise durch einen Kupplungszwischenflansch gebildet sein. Alternativ oder zusätzlich kann ein Kupplungselement beispielsweise auch durch eine Kupplungsdruckplatte gebildet sein, wobei die spezielle Ausgestaltung der Kupplungselemente beispielsweise vom Startertyp abhängig sein kann.

Zum Schutz der Rotorwicklung kann ein Armierungsring vorgesehen sein. Dieser Armierungsring wird durch Befestigungsmittel mit dem Rotorkörper verbunden, wobei diese Befestigungsmittel entweder durch die zur Verbindung der Rotorbestandteile verwendeten Befestigungsmittel oder getrennt von diesen vorliegen können. Der Armierungsring selbst kann ein Tiefzieh- bzw. Umformteil sein.

Für den Fall, daß es sich um einen einen Käfigläufer darstellenden Kurzschlußrotor handelt, bildet der bei diesem Rotortyp eingesetzte Kurzschlußkäfig, der aus Stäben und Kurzschlußringen oder einstückig gebildet sein kann, die Rotorwicklung.

Der Außenumfang des Rotorkörpers ist vorzugsweise zylinderförmig, wobei beispielsweise zwei im wesentlichen ringförmige Lamellen jeweils einen Abschnitt dieses Außenumfangs bilden können.

Zumindest eine der Lamellen ist vorzugsweise mit dem Grundkörper verbunden.

Wenn drei im wesentlichen ringförmige Lamellen vorgesehensind, von denen jede einen Abschnitt des zylinderförmigen Rotorkörper-Außenumfangsbereichs bildet, ist vorzugsweise nur die mittlere Lamelle mit dem Grundkörper verbunden, wobei die Lamellen untereinander in diesem Fall durch Verbindungsmittel verbunden sind, die gleichzeitig zur Befestigung des genannten Armierungsringes dienen können.

Sofern eine als Impulsgeber dienende Verzahnung vorgesehen ist, wird diese vorzugsweise durch die Innengeometrie von zumindest einer im wesentlichen ringförmigen Lamelle gebildet.

Je nach Ausführungsform können zur Unterstützung der Drehmomentübertragung zwischen den einzelnen Rotorkörperbestandteilen Paßfedern oder gleichwirkende Mittel vorgesehen sein, wobei deren Einsatz aus Kosten- und Gewichtsgründen nur dann erfolgen sollte, wenn die spezielle Ausführungsform dies tatsächlich erforderlich macht.

Aus den Unteransprüchen ergeben sich die genannten und weitere vorteilhafte Ausgestaltungen und Weiterbildungen der Erfindung.

### Zeichnungen

Ausführungsbeispiele der Erfindung, bei denen der erfindungsgemäße Rotorkörper eine nicht-rotationssymmetrische Form aufweist und zur Verwendung in einem Starter-Generator für eine Brennkraftmaschine vorgesehen ist, werden nachfolgend anhand der zugehörigen Zeichnungen näher erläutert.

Es zeigen:
- Fig. 1: eine erste Schnittansicht eines bekannten nicht-rotationssymmetrischen Rotorkörpers;
- Fig. 2: eine zweite Schnittansicht des Rotorkörpers nach Fig. 1;
- Fig. 3: eine perspektivische Darstellung des bekannten Rotorkörpers nach Fig. 1;
- Fig. 4: eine teilweise geschnittene Ansicht eines bekannten Rotors, der den bekannten Rotorkörper nach Fig. 1 umfaßt;
- Fig. 5: eine teilweise geschnittene Ansicht einer ersten Ausführungsform des erfindungsgemäßen Rotorkörpers,
- Fig. 6: eine Schnittansicht einer zweiten Ausführungsform des erfindungsgemäßen Rotorkörpers;
- Fig. 7: eine Lamelle, die Bestandteil des erfindungsgemäßen Rotorkörpers nach Fig. 6 ist.

### Beschreibung der Ausführungsbeispiele

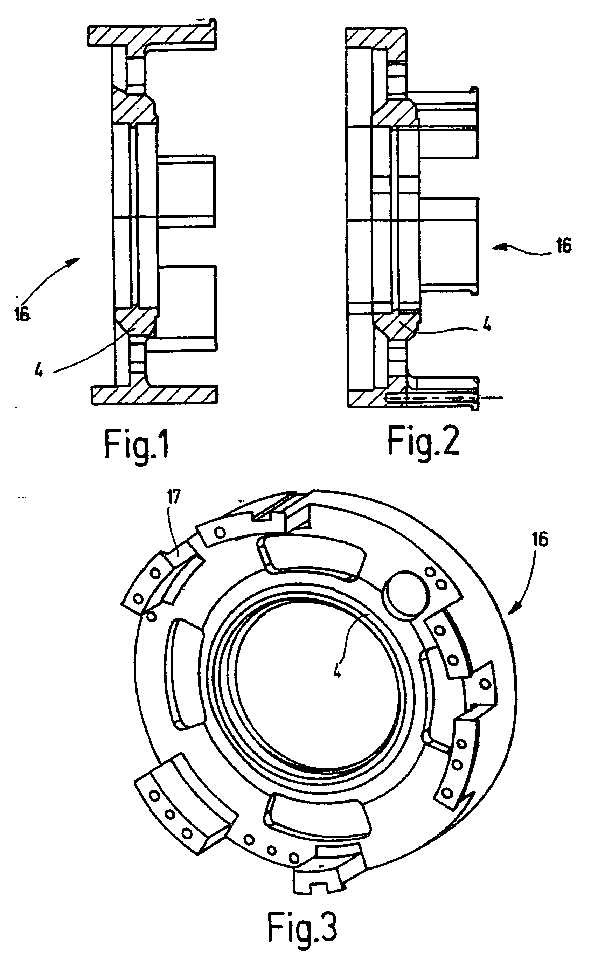

In den Figuren 1 bis 3 ist ein zum Stand der Technik gehörender, gattungsgemäßer, nicht-rotationssymmetrischer Rotorkörper dargestellt, der insgesamt mit 16 bezeichnet ist.

Insbesondere Fig. 3 ist problemlos zu entnehmen, daß ein derartiger Rotorkörper, dessen Unsymmetrie beispielsweise durch Anschraubstege 17 bedingt ist, einstückig nur als äußerst kompliziertes Dreh-Frästeil herstellbar ist, was hohe Kosten und eine große Abfallmenge bedingt.

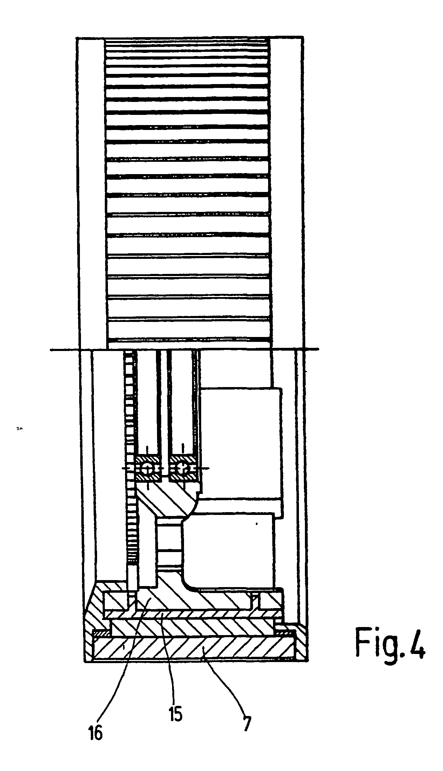

In Fig. 4 ist ein bekannter Rotor dargestellt, der den Rotorkörper 16 gemäß den Figuren 1 bis 3 umfaßt. Bei diesem bekannten Rotor wird das auf die Rotorwicklung bzw. den Kurzschlußkäfig 7 ausgeübte Drehmoment über Paßfedern 15 auf den Rotorkörper 16 übertragen. Von dem Rotorkörper 16 aus erfolgt die Kraftübertragung auf eine nicht dargestellte Kupplungseinrichtung.

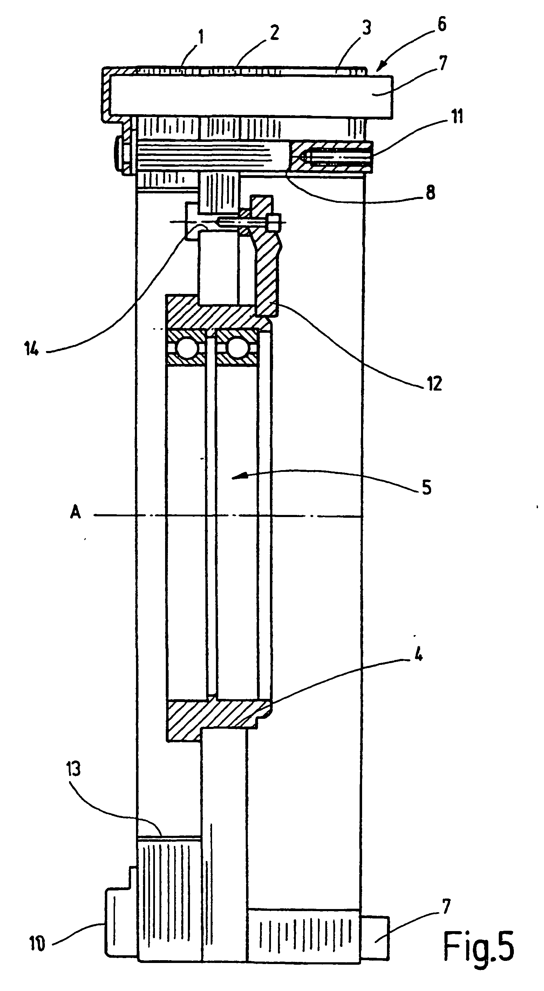

Bei der in Fig. 5 dargestellten Ausführungsform der vorliegenden Erfindung besteht der Rotorkörper aus einem rotationssymmetrischen Grundkörper 5 und drei Lamellen 1, 2, 3. Aufgrund der Rotationssymmetrie des die Nabe 4 bildenden Grundkörpers 5 kann dieser beispielsweise durch Drehen in einem Arbeitsgang hergestellt werden. Die nicht-rotationssymmetrischen Abschnitte des Rotorkörpers werden durch die Lamellen 1, 2, 3 gebildet, die in Richtung der Drehachse A durchgehend die gleiche Stärke aufweisen.

Die drei verschiedenen Lamellen 1, 2, 3 sind mittels eines Verbindungsstiftes 8 zu einem Paket zusammengefaßt.

Im Vergleich zu dem bekannten Rotorkörper nach den Figuren 1 bis 3 ermöglicht die erfindungsgemäße Bauform eine abfallärmere Produktion, da weniger Stanzabfall anfällt.

Weiterhin ermöglicht der erfindungsgemäße Rotorkörper eine höher integrierte Bauform, da die beim Stand der Technik eingesetzte Impulsgeberlamelle durch die Innengeometrie der Lamelle 1 gebildet wird, und zwar durch die Verzahnung 13.

Die Innenkontur der Lamelle 2 bildet die Aufnahmebohrung der Nabe 4, die durch den Grundkörper 5 gebildet wird.

Die Innenkontur der Lamelle 3 ersetzt die beim Stand der Technik gemäß den Figuren 1 bis 3 vorgesehenen Anschraubstege 17, die mit hohem Material- und Zerspanungsaufwand gefertigt werden mußten.

Bei der in Fig. 5 dargestellten Ausführungsform ist die Rotorwicklung 7 im durch die Lamellen 1, 2, 3 gebildeten zylinderförmigen Außenumfangsbereich des Rotorkörpers angeordnet. Durch diesen Aufbau kann die Kraftübertragung direkt von dem durch die Lamellen 1, 2, 3 gebildeten Paket in die Kupplung erfolgen. In Fig. 5 ist eine Kupplungsdruckplatte 12 angedeutet, während im Bereich 11 der Zwischenflansch der Kupplung angeschraubt werden kann.

Die beim Stand der Technik gemäß den Figuren 1 bis 3 zur Drehmomentübertragung erforderlichen Paßfedern 15 können bei der in Fig. 5 dargestellten Ausführungsform entfallen, da der Abtrieb wie erwähnt nicht über den Grundkörper 5 erfolgt.

Der in Fig. 5 dargestellte Armierungsring 10, der als Tiefzieh- bzw. Umformteil vorliegen kann, ist vorzugsweise durch die Verbindungsstifte 8 mit befestigt, wobei auch andere Befestigungsarten wie beispielsweise Schrauben, Nieten oder Verstemmen denkbar sind.

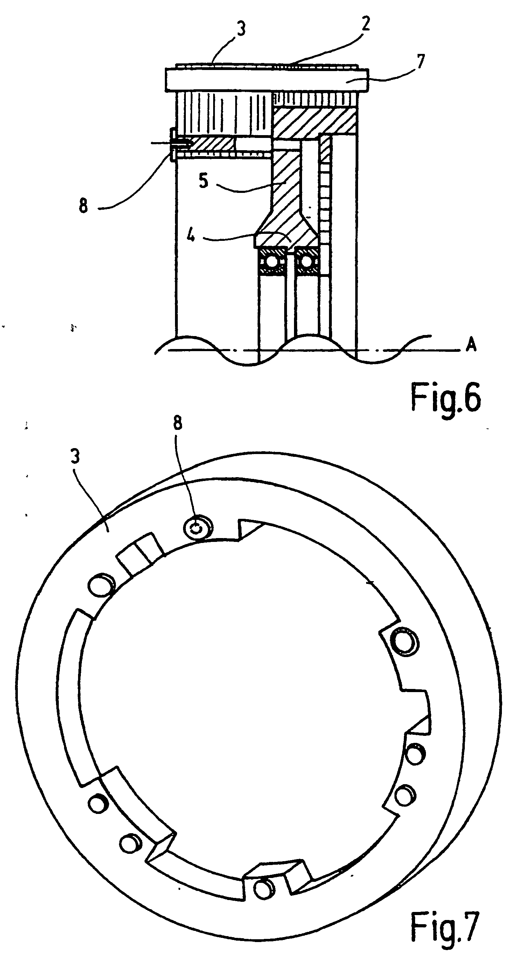

In Fig. 6 ist eine alternative Ausführungsform dargestellt, bei der der Rotorkörper durch einen Grundkörper 5 und zwei Lamellen 2, 3 gebildet ist.

Bei dieser Ausführungsform ist die Lamelle 3 über Verbindungsmittel 8 mit dem Grundkörper 5 verbunden, der auch hier die Nabe 4 bildet. Die Lamelle 2 umgibt den Grundkörper 5 koaxial, wobei die Stärke der Lamelle 2 an den zylinderförmigen Außenumfangsbereich des Grundkörpers 5 angepaßt ist. Auch bei dieser Ausführungsform werden die Anschraubstege durch die Lamelle 3 gebildet.

Das auf die Rotorwicklung 7 ausgeübte Drehmoment kann bei dieser Ausführungsform beispielsweise über nicht dargestellte Paßfedern auf den Grundkörper 5 übertragen werden. Die Kraftübertragung vom Grundkörper 5 kann dann über durch Bolzen gebildete Verbindungsmittel 8 auf die Lamelle 3 und von dort beispielsweise zur Kupplung erfolgen.

In Fig. 7 ist eine perspektivische Darstellung der Lamelle 3 gezeigt, wobei sich die Bauform dieser Lamelle nicht von der Bauform der Lamelle 3 gemäß Fig. 5 zu unterscheiden braucht.

Unabhängig von der jeweiligen Ausführungsform können die einzelnen Lamellen 1, 2, 3 einstückig oder als Stanzpaket vorliegen, wobei die Stanzpaketierung als besonders kostengünstig erachtet wird.

Obwohl die Ausführungsbeispiele einen nicht-rotationssymmetrischen Rotorkörper betreffen, ist die vorliegende Erfindung nicht auf derartige Rotorköper beschränkt.

Wie bereits erwähnt, ist es ebenfalls denkbar, daß der gesamte Rotorköper als paketierte Baugruppe vorliegt.

## Patentansprüche

1. Rotorkörper, insbesondere für den Rotor des Starters oder des Starter-Generators einer Brennkraftmaschine, mit einer koaxial zur Rotordrehachse (A) verlaufenden Nabe (4), wobei der Rotorkörper aus einem rotationssymmetrischen die Nabe (4) bildenden Grundkörper (5) und einer oder mehreren Lamellen (1, 2, 3) gebildet ist, die in Richtung der Rotordrehachse (A) jeweils eine durchgehend gleiche Stärke aufweisen, **dadurch gekennzeichnet, daß** es sich um einen nicht rotationssymmetrischen Rotorkörper handelt.

2. Rotorkörper nach Anspruch 1, **dadurch gekennzeichnet, daß** eine oder mehrere der Lamellen (1,2,3) stanzpaketierte Lamellen oder einstückig hergestellte Lamellen sind.

3. Rotorkörper nach einem der vorhergehenden Ansprüche, **dadurch gekennzeichnet, daß** einzelne Lamellenbestandteile und/oder einzelne Lamellen und/oder der Grundkörper (5) durch Verbindungsmittel (8) verbunden sind.

4. Rotorkörper nach einem der vorhergehenden Ansprüche, **dadurch gekennzeichnet, daß** die Verbindungsmittel (8) durch Schrauben und/oder Stifte und/oder Bolzen und/oder Nieten gebildet sind.

5. Rotorkörper nach einem der vorhergehenden Ansprüche, **dadurch gekennzeichnet, daß** an seinem durch eine oder mehrere Lamellen (1,2,3) gebildeten Außenumfangsbereich ein Bereich (6) zur Aufnahme der Rotorwicklung (7) vorgesehen ist.

6. Rotorkörper nach einem der vorhergehenden Ansprüche, **dadurch gekennzeichnet, daß** eine oder mehrere Lamellen (1,2,3) zumindest einen Verbindungsbereich (11,14) bilden, der zur Verbindung des Rotorkörpers mit zumindest einem Kupplungselement vorgesehen ist.

7. Rotorkörper nach einem der vorhergehenden Ansprüche, **dadurch gekennzeichnet, daß** zumindest ein Kupplungselement durch einen Kupplungszwischenflansch und/oder ein Kupplungselement durch eine Kupplungsdruckplatte (12) gebildet ist.

8. Rotorkörper nach einem der vorhergehenden Ansprüche, **dadurch gekennzeichnet, daß** Mittel (8) zur Befestigung eines Armierungsringes (10) vorgesehen sind, der zumindest Teile der Rotorwicklung (7) abdeckt.

9. Rotorkörper nach einem der vorhergehenden Ansprüche, **dadurch gekennzeichnet, daß** der Armierungsring durch ein Tiefzieh- bzw. Umformteil gebildet ist.

10. Rotorkörper nach einem der vorhergehenden Ansprüche, **dadurch gekennzeichnet, daß** sein Außenumfang zylinderförmig ist, und daß zwei im wesentlichen ringförmige Lamellen (2,3) vorgesehen sind, die jeweils einen Abschnitt des Ausßenumfangs bilden.

11. Rotorkörper nach einem der vorhergehenden Ansprüche, **dadurch gekennzeichnet, daß** zumindest eine der Lamellen (2) mit dem Grundkörper verbunden ist.

12. Rotorkörper nach einem der vorhergehenden Ansprüche, **dadurch gekennzeichnet, daß** drei im wesentlichen ringförmige Lamellen (1,2,3) vorgesehen sind, von denen jede einen Abschnitt des zylinderförmigen Rotorkörper-Außenumfangsbereichs bildet, und daß nur die mittlere Lamelle (2) mit dem Grundkörper (5) verbunden ist.

13. Rotorkörper nach einem der vorhergehenden Ansprüche, **dadurch gekennzeichnet, daß** die Innengeometrie von zumindest einer im wesentlichen ringförmigen Lamelle (1) eine als Impulsgeber dienende Verzahnung (13) bildet.

14. Rotorkörper nach einem der vorhergehenden Ansprüche, **dadurch gekennzeichnet, daß** zur Unterstützung der Drehmomentübertragung zwischen den Rotorkörperbestandteilen Paßfedern oder gleichwirkende Mittel vorgesehen sind.

15. Rotorkörper nach einem der vorhergehenden Ansprüche, **dadurch gekennzeichnet, daß** der Grundkörper (5) ein Drehteil und/oder ein Stanz-Zieh-Biege-Teil und/oder ein stanzpaketiertes Teil ist.

## Claims

1. Rotor body, in particular for the rotor of the starter or of the starter generator of an internal combustion engine, having a hub (4) which extends coaxially with respect to the axis of rotation (A) of the rotor, the rotor body being formed from a rotationally symmetrical base body (5) which forms the hub (4) and from one or more laminations (1, 2, 3) which in each case are of the same thickness throughout in the direction of the axis of rotation (A) of the rotor, **characterized in that** the rotor body is not rotationally symmetrical.

2. Rotor body according to Claim 1, **characterized in that** one or more of the laminations (1, 2, 3) is/are punch-stacked laminations or integrally produced laminations.

3. Rotor body according to either of the preceding claims, **characterized in that** individual constituent parts of the laminations and/or individual laminations and/or the base body (5) are connected by connecting means (8).

4. Rotor body according to one of the preceding claims, **characterized in that** the connecting means (8) are formed by screws and/or pins and/or bolts and/or rivets.

5. Rotor body according to one of the preceding claims, **characterized in that** a region (6) for accommodating the rotor winding (7) is provided on the outer circumferential region of the said rotor body, this outer circumferential region being formed by one or more laminations (1, 2, 3).

6. Rotor body according to one of the preceding claims, **characterized in that** one or more laminations (1, 2, 3) form at least one connection region (11, 14) which is provided for the purpose of connecting the rotor body to at least one clutch element.

7. Rotor body according to one of the preceding claims, **characterized in that** at least one clutch element is formed by an intermediate coupling, flange and/or one clutch element is formed by a clutch thrust plate (12).

8. Rotor body according to one of the preceding claims, **characterized in that** means (8) are provided for the purpose of attaching a reinforcing ring (10) which covers at least parts of the rotor winding (7).

9. Rotor body according to one of the preceding claims, **characterized in that** the reinforcing ring is formed by a deep-drawn or shaped part.

10. Rotor body according to one of the preceding claims, **characterized in that** the outer circumference of the rotor body is cylindrical, and **in that** two essentially annular laminations (2, 3) are provided which each form one section of the outer circumference.

11. Rotor body according to one of the preceding claims, **characterized in that** at least one of the laminations (2) is connected to the base body.

12. Rotor body according to one of the preceding claims, **characterized in that** three essentially annular laminations (1, 2, 3) are provided, each of which form one section of the cylindrical outer circumferential region of the rotor body, and **in that** only the middle lamination (2) is connected to the base body (5).

13. Rotor body according to one of the preceding claims, **characterized in that** the inner geometry of at least one essentially annular lamination (1) forms a toothing (13) which is used as a pulse generator.

14. Rotor body according to one of the preceding claims, **characterized in that** feather keys or means which act in a similar manner are provided to assist the transmission of torque between the constituent parts of the rotor body.

15. Rotor body according to one of the preceding claims, **characterized in that** the base body (5) is a turned part and/or a part which is punched, deep-drawn and bent and/or a punch-stacked part.

## Revendications

1. Corps de rotor, en particulier pour le rotor du démarreur ou démarreur-génératrice d'un moteur à combustion interne, muni d'un moyeu (4) coaxial à l'axe de rotation (A) du rotor, et formé d'un corps de base symétrique de révolution (5) formant le moyeu (4) et d'une ou plusieurs lamelles (1, 2, 3) qui présentent chacune une épaisseur constante sur toute leur étendue dans la direction de l'axe de rotation (A) du rotor,
**caractérisé en ce que**
le corps de rotor n'est pas symétrique de révolution.

2. Corps de rotor selon la revendication 1
**caractérisé en ce que**
une ou plusieurs des lamelles (1, 2, 3) est ou sont empilées-découpées ou fabriquées d'une seule pièce.

3. Corps de rotor selon une des revendications précédentes,
**caractérisé en ce que**
des éléments constitutifs de lamelles distincts et/ou des lamelles distinctes, et/ou le corps de base (5) sont assemblés par des moyens de liaison (8).

4. Corps de rotor selon une des revendications précédentes,
**caractérisé en ce que**
les moyens de liaison (8) sont des vis et/ou des goupilles et/ou des goujons et/ou des rivets.

5. Corps de rotor selon une des revendications précédentes,
**caractérisé en ce que**
dans sa zone périphérique extérieure formée par une ou plusieurs lamelles (1, 2, 3), une zone (6) est destinée à recevoir l'enroulement de rotor (7).

6. Corps de rotor selon une des revendications précédentes,
**caractérisé en ce qu'**
une ou plusieurs lamelles (1, 2, 3) forme(nt) au moins une zone de liaison (11, 14) prévue pour relier le corps de rotor à au moins un élément d'accouplement.

7. Corps de rotor selon une des revendications précédentes,
**caractérisé en ce qu'**
au moins un élément d'accouplement est un disque intermédiaire d'embrayage et/ou un plateau de pression d'embrayage (12).

8. Corps de rotor selon une des revendications précédentes,
**caractérisé en ce que**
des moyens (8) sont prévus pour fixer une bague d'armature (10) qui recouvre au moins des parties de l'enroulement (7) du rotor.

9. Corps de rotor selon une des revendications précédentes,
**caractérisé en ce que**
la bague d'armature est formée par une pièce emboutie ou déformée.

10. Corps de rotor selon une des revendications précédentes,
**caractérisé en ce que**
sa périphérie extérieure est cylindrique, et deux lamelles (2, 3) sensiblement annulaires forment chacune un segment de la périphérie extérieure.

11. Corps de rotor selon une des revendications précédentes,
**caractérisé en ce que**
au moins une des lamelles (2) est assemblée au corps de base.

12. Corps de rotor selon une des revendications précédentes,
**caractérisé par**
trois lamelles (1, 2, 3) sensiblement annulaires dont chacune forme un segment de la région périphérique extérieure cylindrique du corps de rotor, et dont seule la lamelle centrale (2) est reliée au corps de base (5).

13. Corps de rotor selon une des revendications précédentes,
**caractérisé en ce que**
la géométrie intérieure d'au moins une lamelle (1) sensiblement annulaire forme une denture servant de générateur d'impulsions.

14. Corps de rotor selon une des revendications précédentes,
**caractérisé en ce que**
des clavettes ajustées ou moyens ayant un effet analogue sont prévus pour assister la transmission du couple entre les parties constitutives du corps de rotor.

15. Corps de rotor selon une des revendications précédentes,
**caractérisé en ce que**
le corps de base (5) est une pièce tournée et/ou une pièce découpée-emboutie-pliée et/ou une pièce empilée-découpée.
